# EUROPÄISCHE PATENTSCHRIFT

(11) **EP 1 136 459 B1**
(45) Veröffentlichungstag und Bekanntmachung des Hinweises auf die Patenterteilung: **16.11.2005**
(21) Anmeldenummer: 01106119.9
(22) Anmeldetag: 13.03.2001
(51) Int. Cl.: C04B 28/14, C04B 24/14

(54) **Verfahren zur Verzögerung des Abbindens von Gips**
A method of retarding the setting of gypsum
Procédé visant à retarder la prise de plâtre

(30) Priorität: 22.03.2000 DE 10014145
(43) Veröffentlichungstag der Anmeldung: 26.09.2001
(73) Patentinhaber: Cognis Deutschland GmbH & Co. KG, 40789 Monheim (DE)
(72) Erfinder: Knoerr, Walter, Dr., 89257 Illertissen (DE); Kielbassa, Alexander, 89604 Allmendingen (DE)

(56) Entgegenhaltungen:
- US-A- 4 482 574
- US-A- 4 661 161
- DATABASE WPI Section Ch, Week 197849 Derwent Publications Ltd., London, GB; Class A21, AN 1978-88716A XP002171430 & JP 53 125429 A (SUMITOMO CHEM CO LTD), 1. November 1978 (1978-11-01)
- DATABASE WPI Section Ch, Week 197636 Derwent Publications Ltd., London, GB; Class L02, AN 1976-67757X XP002171431 & JP 51 083628 A (AJINOMOTO KK), 22. Juli 1976 (1976-07-22)

## Beschreibung

### Gebiet der Erfindung

Die Erfindung befindet sich auf dem Gebiet der Gipsverarbeitung und betrifft ein verbessertes Verfahren zur Verzögerung des Abbindens von Gips sowie die Verwendung spezieller Kondensationsprodukte als Abbindeverzögerer.

### Stand der Technik

Im Baugewerbe und in der Bildhauerei werden große Mengen an Gipsmassen eingesetzt. Dabei wird gebrannter Gips oder Stuckgips entweder alleine oder in Mischung mit Kalk, Sand und Leichtzuschlagstoffen wie Perlit oder Cellulosederivate in grösserem Umfang verwendet. Die Abbindezeit der Gipsmassen nach dem Anrühren mit Wasser ist jedoch relativ kurz, so dass eine schnelle Verarbeitung erfolgen muss. Eine Übersicht hierzu findet sich beispielsweise von Ruffer in **Keram. Ztg.** **39(1),** **13-15 (1987).**

In der Vergangenheit hat es nicht an Bemühungen gefehlt, die offene Zeit bei der Gipsverarbeitung durch Zugabe geeigneter Additive zu verlängern. So wird beispielsweise in der **DE-OS 2325738** (Henkel) vorgeschlagen, den Gipsmassen wasserlösliche Polymere auf Basis von ungesättigten Dicarbonsäuren zuzusetzen. Aus der Patentschrift **DE-PS 752194** (BASF) sind für diesen Zweck des weiteren basische Kondensationsprodukte von aliphatischen Aminosäuren mit Formaldehyd bekannt. Über ähnliche Stoffe wird des weiteren auch von Müller in **Zem.Kalk.Gips** **27(2),** **69-74 (1974)** berichtet. Die Stoffe sind jedoch nicht nur in Bezug auf ihre Verzögerungseigenschaften unzureichend, sondern zudem auch dunkel gefärbt und besitzen einen stechenden Geruch, was zusammen genommen ihren Einsatz für den beabsichtigten Zweck stark einschränkt.

Die Aufgabe der vorliegenden Erfindung hat dementsprechend darin bestanden, ein verbessertes Verfahren zur Verzögerung des Abbindens von Gips unter Einsatz neuer Hilfsstoffe zur Verfügung zu stellen.

### Beschreibung der Erfindung

Gegenstand der Erfindung ist ein Verfahren zur Verzögerung des Abbindens von Gips, welches sich dadurch auszeichnet, daß man Kondensationsprodukte von enzymatisch gewonnenen Proteinhydrolysaten mit Formaldehyd einsetzt.

Überraschenderweise wurde gefunden, daß die genannten Kondensationsprodukte auf Basis von Proteinabbauprodukten, die ausschließlich, wenigstens aber überwiegend durch enzymatische Verfahren gewonnen werden, nicht nur deutlich hellfarbiger und geruchsärmer sind, sondern infolge höherer N- und Carboxyl-Funktionalität auch eine signifikant verbesserte Abbindeverzögerung.

### Proteinhydrolysate

Die im Sinne des erfindungsgemäßen Verfahrens einzusetzenden Kondensationsprodukte enthalten als eine Komponente Proteinhydrolysate, bei denen es sich zwingend um Abbauprodukte von tierischen oder pflanzlichen Proteinen, beispielsweise Elastin oder Keratin und vorzugsweise Mandel-, Reis- und Kartoffelprotein sowie insbesondere Kollagen, Weizen-, und Sojaprotein handelt, welche vollständig, zumindest aber überwiegend durch enzymatische Hydrolyse gespalten werden. Die Proteinhydrolysate weisen üblicherweise ein Molekulargewicht im Bereich von 100 bis 1.000 auf, d.h. es handelt sich um Tri- bis Decapeptide.

Die enzymatische Hydrolyse kann in Gegenwart von Proteinasen und/oder Peptidasen durchgeführt werden. Diese Enzyme zählen zur Gruppe der Proteasen, also Enzymen, welche die hydrolytische Spaltung der Peptidbindung katalysieren und daher systematisch gesehen zu den Hydrolasen gehören. Proteinasen, die auch als Endoproteasen oder Endopeptidasen bezeichnet werden, spalten Peptidbindungen im Inneren des Proteins. Sie sind von den (Exo-)Peptidasen zu unterscheiden, die einen Abbau der terminalen Peptidbindung von der endständigen Amino- bzw. Carboxylgruppe bewirken.
Typische Beispiele für zur Herstellung von Proteinabbauprodukten geeignete **Proteinasen** sind die im Handel erhältlichen Serin-Proteinasen (EC 3.4.21), Cystein- bzw. Thiol-Proteinasen (EC 3.4.22), saure Proteinasen vom Typ der Aspartat- bzw. Carboxyproteinasen (EC 3.4.23) sowie untergeordnet auch Metall-Proteinasen (3.4.24). Beispiele für geeignete Serin- Proteinasen sind Chymotrypsin, Elastase, Kallikrein, Plasmin, Trypsin, Thrombin und Subtilisin.

Zu den geeigneten **Peptidasen** zählen beispielsweise die α-Aminoacylpeptid-Hydrolasen oder Aminopeptidasen (EC 3.4.11), die am Ende des Polypeptids einzelne Aminosäuren ablösen, die Dipeptid-Hydrolasen bzw. Dipeptidasen (EC 3.4.13), die Dipeptide zu Aminosäuren hydrolysieren, die Dipeptidylpeptid-Hydrolasen bzw. Dipeptidylpeptidasen (EC 3.4.14), die aminoständige Dipeptide eines Polypeptids freisetzen, Peptidyldipeptid-Hydrolasen bzw. Dipeptidylcarboxypeptidasen (EC 3.4.15), die einzelne Aminosäuren des Carboxy-Terminus abtrennen, Carboxypeptidasen (EC 3.4.16 - 3.4.18) und Omega-Peptidasen (EC 3.4.19), die modifizierte Aminosäuren von beiden Ende des Polypeptids abspalten. Die Menge der eingesetzten Proteinasen bzw. Peptidasen ist an sich nicht kritisch, sollte jedoch jeweils im Bereich von 0,1 bis 5, vorzugsweise 0,5 bis 2 Gew.-% - bezogen auf die Ausgangsstoffe - liegen.

Zur Entfernung von Spuren an unerwünschten Farbverursachem hat es sich als vorteilhaft erwiesen, die proteinhaltigen Ausgangsstoffe zusammen mit geeigneten Adsorbentien in die Hydrolyse einzusetzen. Als Adsorbentien kommen beispielsweise Kieselgele, Aluminiumoxide und vorzugsweise Aktivkohlen in Betracht, die in Mengen von 0,1 bis 15, vorzugsweise 1 bis 5 Gew.-% - bezogen auf den Stickstoffgehalt der proteinhaltigen Ausgangsstoffe - eingesetzt werden können.

Zur Durchführung der enzymatischen Hydrolyse wird eine wäßrige Suspension des proteinhaltigen Ausgangsstoffs gegebenenfalls zusammen mit den Adsorbentien wie oben beschrieben über einen Zeitraum von 1 bis 24 h im Temperatur- und pH-Wertoptimum der eingesetzten Proteinasen und Peptidasen, beispielsweise bei 40 bis 70 °C abgebaut. Besonders vorteilhaft ist es, die Hydrolyse unterhalb der Verkleisterungstemperatur der im Protein noch enthaltenen Kohlenhydrate durchzuführen. Wird der Aufschluß in Gegenwart von Calciumoxid bzw. Calciumhydroxid als Base durchgeführt, bilden sich lösliche Calciumpeptide, die vom ungelösten Calciumoxid oder Calciumhydroxid durch Filtration abgetrennt werden können. Werden die Alkalipeptide gewünscht, empfiehlt es sich, die Calciumpeptide mit Soda- oder Pottaschelösung zu behandeln und das schwerlösliche Calciumcarbonat anschließend abzutrennen. Es ist ebenfalls möglich, das Calcium in Form von Calciumsulfat oder Calciumoxalat zu fällen oder die Hydrolyse direkt in Gegenwart von Alkalihydroxid oder Carbonat durchzuführen. Die Abtrennung der schwerlöslichen Salze, sofern erforderlich, erfolgt vorzugsweise in Gegenwart von Filterhilfsmitteln mit den üblichen Trennverfahren für Fest/Flüssig-Trennungen wie Filtration, Separation und dergleichen. Für technische Zwecke empfiehlt sich aus Kostengründen ein Einsatz der nicht weiter aufgereinigten Rohhydrolysate, da schwerlösliche Calciumsalze in der Zielanwendung nicht stören, möglicherweise sogar synergistisch wirken, außer die Proteinhydrolysate sollen aufkonzentriert werden, wobei hohe Salzfrachten den Verdampfungsprozess stören würden.

Es werden wäßrige Proteinhydrolysatlösungen erhalten, die nach Bedarf beispielsweise unter Einsatz von Fallstromverdampfern aufkonzentriert werden können. Die nach dem erfindungsgemäßen Verfahren erhältlichen Hydrolysate weisen ein mittleres Molekulargewicht im Bereich von 100 bis 30.000, vorzugsweise 100 bis 10.000 und insbesondere 2000 bis 5000 auf sowie einen Feststoffgehalt von etwa 5 bis 60 Gew.-%.

### Proteinhydrolysat-Formaldehydkondensate

Die Herstellung der Kondensationsprodukte kann in an sich bekannter Weise erfolgen, indem man die Hydrolysate oder Aminosäuren oder Gemischen aus Aminosäuren untereinander oder mit Proteinhydrolysaten mit einer für die Kondensation ausreichenden Menge wäßriger Formaldehydlösung zusammenbringt, über einen Zeitraum von 0,5 bis 5 h erhitzt und dabei die freigesetzte Menge Wasser entfernt. Es ist zwar vorteilhaft, wenngleich nicht immer erforderlich, alle freien N-Funktionalitäten im Proteinabbauprodukt zu kondensieren, daher können die Komponenten über ein weites Molverhältnis Formaldehyd zu Amin-Stickstoff, beispielsweise im Verhältnis 1 : 10 bis 10 : 1 eingesetzt werden. Bevorzugt ist jedoch ein deutlicher Überschuß des Formaldehyds, beispielsweise ein Molverhältnis Formaldehyd zu Amin-Stickstoff im Bereich 1,5 : 1 bis 5 : 1. Im Anschluß an die Kondensation können die Reaktionsprodukte entweder als wäßrige Zubereitungen eingesetzt oder einer Trocknung, beispielsweise durch Sprühtrockung unterzogen werden. Im letzten Fall gelangen sie dann in Form trockener Pulver in den Handel. Die Einsatzmenge der Kondensationsprodukte kann dabei 0,05 bis 1, vorzugsweise 0,1 bis 0,5 Gew.-% - bezogen auf die Menge Gips - betragen.

### Gewerbliche Anwendbarkeit

Ein weiterer Gegenstand der Erfindung betrifft schließlich die Verwendung von Kondensationsprodukten von enzymatisch gewonnenen Proteinhydrolysaten mit Formaldehyd (als Abbindeverzögerer für Gips, dem die Stoffe vorzugsweise in Mengen von 0,1 bis 1 Gew.-% zugesetzt werden.

### Beispiele

**Herstellbeispiel H1.** In einem 5-m³-Rührkessel wurden 3500 I Warmwasser (T= 50 °C) vorgelegt und mit 1,3 kg Natriumsulfit und 14 kg Aktivkohle versetzt. Bei 48 bis 50 °C wurden bei maximaler Rührerdrehzahl 650 kg Weizenproteinisolat zugesetzt und zu einer Suspension verrührt. Danach wurde der pH-Wert der Reaktionsmischung durch Zugabe von Salzsäure auf pH = 3,0 eingestellt. Anschließend wurden 5 kg Proteinase mit einem pH-Optimum im sauren Bereich zugegeben. Bei der Hydrolyse und der sich anschließenden ersten Filtration wurde die Temperatur auf maximal 50 °C begrenzt und die Sulfitkonzentration oberhalb vom 10 ppm gehalten. Durch Zugabe von Salzsäure wurde der pH-Wert zunächst bei 3,0 gehalten und nach 2 h durch Zugabe von Calciumhydroxid auf 8,5 eingestellt. Gleichzeitig erfolgte die Zugabe von weiteren 14 kg Aktivkohle und 5 kg Proteinase mit einem pH-Optimum im alkalischen Bereich. Ohne pH-Wert-Korrektur wurden weitere 2 h bei etwa 50 °C gerührt. Nach Abschluß der enzymatischen Hydrolyseschritte wurde der pH-Wert der Mischung durch Zugabe von Calciumhydroxid auf pH = 7,5 eingestellt. Das so hergestellte Hydrolysat wurde nach Zugabe von 70 kg Filterhilfsmittel über eine Filterpresse filtriert. Anschließend wurden zum Filtrat 20 kg Carbopal® GnA gegeben und auf 80 °C erhitzt. Diese Temperatur wurde 15 min gehalten. Danach wurde der Ansatz auf 50 °C abgekühlt und 30 bei dieser Temperatur gerührt. Nach Zugabe von weiteren 15 kg Filterhilfsmittel wurde noch einmal über eine Filterpresse filtriert. Schließlich wurde das Calcium durch Zugabe von Soda ausgefällt und das Calciumcarbonat über eine Filterpresse abgetrennt. Das Filtrat wurde in einem Fallstromverdampfer bis zu einem Gehalt von 44 % Brix aufkonzentriert. Eine Mischung von 50 g des Weizenproteinhydrolysats und 17,4 g Calciumhydroxid wurde mit 217 g einer 30 Gew.-%igen Formaldehydlösung versetzt. Die Masse wurde einige Minuten lang auf 95 bis 100 °C erhitzt und dann bei 120 °C eingedampft. Das Kondensationsprodukt wurde als praktisch farblose, geruchsfreie Masse erhalten.

**Herstellbeispiel H2.** In einem 5-m³-Rührkessel wurden 3500 l Warmwasser vorgelegt und mit 4 kg Natriumsulfit und 10 kg Aktivkohle versetzt. Dieser Mischung wurden bei maximaler Rührerdrehzahl 450 kg Reisprotein zugesetzt und zu einer Suspension verrührt. Die Reaktionsmischung wurde auf 75 °C erhitzt und bei dieser Temperatur 15 min gerührt. Danach wurde auf 75 °C abgekühlt und der pH-Wert der Suspension mit Natronlauge auf 8,5 eingestellt. Durch Zugabe von 5 kg Proteinase wurde die Hydrolyse gestartet. Nach einer Rührzeit von 3 h, während der der pH- Wert auf 8,5 und der Sulfitgehalt oberhalb von 10 ppm gehalten wurde, wurde der pH-Wert durch Zugabe von Citronensäure auf 4,0 eingestellt. Danach wurde der Ansatz unter Zusatz von 15 kg Filterhilfsmittel über eine Filterpresse filtriert. Anschließend wurden 10 kg Aktivkohle zum Filtrat gegeben und auf 80 °C erhitzt. Die Mischung wurde 15 min bei dieser Temperatur gerührt und danach auf 50 °C abgekühlt. Es wurden weitere 30 min bei 50 °C gerührt und wiederum über eine Filterpresse filtriert. Das Filtrat wurde in einem Fallstromverdampfer bis zu einem Gehalt von ca. 35 % Brix aufkonzentriert und durch Zugabe einer Mischung aus Phenoxyethanol, Natriumbenzoat, pHB-Methyl- und pHB-Ethylester konserviert. Nach einer Lagerung von 14 Tagen bei Raumtemperatur wurde nach Zugabe von weiteren 10 kg Aktivkohle und filterhilfsmittel über eine Filterpresse filtriert. Eine Mischung von 50 g des Reisproteinhydrolysats und 17,4 g Calciumhydroxid wurde mit 217 g einer 30 Gew.-%igen Formaldehydlösung versetzt. Die Masse wurde einige Minuten lang auf 95 bis 100 °C erhitzt und dann bei 120 °C eingedampft. Das Kondensationsprodukt wurde als praktisch farblose, geruchsfreie Masse erhalten.

**Herstellbeispiel HV1.** Eine Mischung von 50 g Aminopropionsäure und 17,4 g Natriumhydroxid in 100 Wasser wurde mit 217 g einer 30 Gew.-%igen Formaldehydlösung versetzt. Die Masse wurde einige Minuten lang auf 95 bis 100 °C erhitzt und dann bei 120 °C eingedampft. Das Kondensationsprodukt wurde als dunkelbraun gefärbte, blasige Masse mit stechendem Eigengeruch erhalten.

**Herstellbeispiel HV2.** Analog Beispiel HV1 wurden 42 g Aminoessigsäure und 14 g Calciumhydroxid mit 210 g einer 30 Gew.-%igen Formaldehydlösung versetzt, erhitzt und dann eingedampft. Das Kondensationsprodukt wurde als hellbraun gefärbte Masse mit stechendem Eigengeruch erhalten.

**Anwendungstechnische Untersuchungen.** Zur Untersuchung der Abbindeverzögerung wurden jeweils 250 g Stuckgips und 250 ml Wasser als Testmenge verwendet und mit 0,15 g der Zusatzstoffe versetzt. Als Abbindezeit wurde der Zeitraum angegeben, in dem der Gips gut streichfähig und leicht zu verarbeiten war. Die Beispiele 1 und 2 sind erfindungsgemäß die Beispiele V1 bis V3 dienen zum Vergleich.

**Tabelle 1**

| **Abbindezeit [min]** | | | | | |
|---|---|---|---|---|---|
| **Zusatzstoff** | **1** | **2** | **V1** | **V2** | **V3** |
| Kondensat Beispiel H1 | 220 | - | - | - | - |
| Kondensat Beispiel H2 | - | 218 | - | - | - |
| ohne | - | - | 15 | - | - |
| Kondensat Beispiel HV1 | - | - | - | 150 | - |
| Kondensat Beispiel HV2 | - | - | - | - | 150 |

## Patentansprüche

1. Verfahren zur Verzögerung des Abbindens von Gips, **dadurch gekennzeichnet, daß** man Kondensationsprodukte von enzymatisch gewonnenen Proteinhydrolysaten mit einem durchschnittlichen Molekulargewicht von 100 bis 30.000 mit Formaldehyd einsetzt.

2. Verfahren nach Anspruch 1, **dadurch gekennzeichnet, daß** man Kondensationsprodukte von tierischen Proteinhydrolysaten mit Formaldehyd einsetzt.

3. Verfahren nach Anspruch 2, **dadurch gekennzeichnet, daß** man Kondensationsprodukte von Kollagenhydrolysaten mit Formaldehyd einsetzt.

4. Verfahren nach Anspruch 1, **dadurch gekennzeichnet, daß** man Kondensationsprodukte von pflanzlichen Proteinhydrolysaten mit Formaldehyd einsetzt.

5. Verfahren nach Anspruch 4, **dadurch gekennzeichnet, daß** man Kondensationsprodukte von Kartoffel-, Weizen-, Reis- und/oder Sojaproteinhydrolysaten mit Formaldehyd einsetzt.

6. Verfahren nach mindestens einem der Ansprüche 1 bis 5, **dadurch gekennzeichnet, daß** man Kondensationsprodukte von Proteinhydrolysaten mit Formaldehyd im Molverhältnis Formaldehyd zu Amin-Stickstoff von 1 : 10 bis 10 : 1 einsetzt.

7. Verfahren nach mindestens einem der Ansprüche 1 bis 6, **dadurch gekennzeichnet, daß** man die Kondensationsprodukte entweder als wäßrige Zubereitungen oder aber trockene Pulver einsetzt.

8. Verfahren nach mindestens einem der Ansprüche 1 bis 7, **dadurch gekennzeichnet, daß** man die Kondensationsprodukte in Mengen von 0,05 bis 1 Gew.-% - bezogen auf die Menge Gips - einsetzt.

9. Verwendung von Kondensationsprodukten von enzymatisch gewonnenen Proteinhydrolysaten mit einem durchschnittlichen Molekulargewicht von 100 bis 30.000 mit Formaldehyd als Abbindeverzögerer für Gips.

## Claims

1. A process for delaying the setting of gypsum, **characterized in that** condensation products of enzymatically obtained protein hydrolyzates having an average molecular weight of 100 to 30,000 with formaldehyde are used.

2. A process as claimed in claim 1, **characterized in that** condensation products of animal protein hydrolyzates with formaldehyde are used.

3. A process as claimed in claim 2, **characterized in that** condensation products of collagen hydrolyzates with formaldehyde are used.

4. A process as claimed in claim 1, **characterized in that** condensation products of vegetable protein hydrolyzates with formaldehyde are used.

5. A process as claimed in claim 4, **characterized in that** condensation products of potato, wheat, rice and/or soya protein hydrolyzates with formaldehyde are used.

6. A process as claimed in at least one of claims 1 to 5, **characterized in that** condensation products of protein hydrolyzates with formaldehyde in a molar ratio of formaldehyde to amine nitrogen of 1:10 to 10:1 are used.

7. A process as claimed in at least one of claims 1 to 6, **characterized in that** the condensation products are used either as aqueous preparations or as dry powders.

8. A process as claimed in at least one of claims 1 to 7, **characterized in that** the condensation products are used in quantities of 0.05 to 1% by weight, based on the quantity of gypsum.

9. The use of condensation products of enzymatically obtained protein hydrolyzates having an average molecular weight of 100 to 30,000 with formaldehyde as setting retarders for gypsum.

## Revendications

1. Procédé pour retarder la prise du plâtre,
**caractérisé en ce qu'**
on utilise des produits de condensation d'hydrolysats de protéines obtenus par voie enzymatique et ayant un poids moléculaire moyen de 100 à 30 000 avec du formaldéhyde.

2. Procédé selon la revendication 1,
**caractérisé en ce qu'**
on utilise des produits de condensation d'hydrolysats de protéines animales avec du formaldéhyde.

3. Procédé selon la revendication 2,
**caractérisé en ce qu'**
on utilise des produits de condensation d'hydrolysats de collagène avec du formaldéhyde.

4. Procédé selon la revendication 1,
**caractérisé en ce qu'**
on utilise des produits de condensation d'hydrolysats de protéines végétales avec du formaldéhyde.

5. Procédé selon la revendication 4,
**caractérisé en ce qu'**
on utilise des produits de condensation d'hydrolysats de protéines de pomme de terre, de blé, de riz et/ou de soja avec du formaldéhyde.

6. Procédé selon au moins une des revendications 1 à 5,
**caractérisé en ce qu'**
on utilise des produits de condensation d'hydrolysats de protéines avec du formaldéhyde dans un rapport molaire du formaldéhyde à l'azote de l'amine de 1 : 10 à 10 : 1.

7. Procédé selon au moins une des revendications 1 à 6,
**caractérisé en ce qu'**
on utilise les produits de condensation soit sous forme de préparations aqueuses, soit sous forme de poudres sèches.

8. Procédé selon au moins une des revendications 1 à 7,
**caractérisé en ce qu'**
on utilise les produits de condensation en quantités de 0,05 à 1 % en poids - par rapport à la quantité de plâtre.

9. Utilisation de produits de condensation d'hydrolysats de protéines obtenus par voie enzymatique et ayant un poids moléculaire moyen de 100 à 30 000 avec du formaldéhyde, comme retardateur de prise pour le plâtre.
